(19) Europäisches Patentamt / European Patent Office / Office européen des brevets

(11) **EP 3 864 096 B1**

(12) **EUROPEAN PATENT SPECIFICATION**


(45) Date of publication and mention of the grant of the patent:
**28.09.2022 Bulletin 2022/39**

(21) Application number: **19791427.8**

(22) Date of filing: **08.10.2019**

(51) International Patent Classification (IPC):
***C09D 5/02*** *(2006.01)* ***C09D 7/63*** *(2018.01)*
***C09D 7/65*** *(2018.01)*

(52) Cooperative Patent Classification (CPC):
**C09D 5/024; C09D 7/63; C09D 7/65;** C08K 5/5477

(86) International application number:
**PCT/US2019/055086**

(87) International publication number:
**WO 2020/076744 (16.04.2020 Gazette 2020/16)**


(54) **LATEX COMPOSITION CONTAINING AN AMINOSILANE AND AN ANION EXCHANGE RESIN**

LATEXZUSAMMENSETZUNG MIT EINEM AMINOSILAN UND EINEM ANIONENAUSTAUSCHERHARZ

COMPOSITION DE LATEX CONTENANT UN AMINOSILANE ET UNE RÉSINE ÉCHANGEUSE D'ANIONS


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.10.2018 US 201862742633 P**

(43) Date of publication of application:
**18.08.2021 Bulletin 2021/33**



(73) Proprietors:
- **Rohm and Haas Company**
  **Collegeville, PA 19426 (US)**
- **Dow Global Technologies LLC**
  **Midland, MI 48674 (US)**

(72) Inventors:
- **ALA, Azize**
  **Collegeville, Pennsylvania 19426 (US)**
- **DOMBROWSKI, Gary W.**
  **Collegeville, Pennsylvania 19426 (US)**
- **HARTNETT, Patrick E.**
  **Collegeville, Pennsylvania 19426 (US)**
- **PRESSLEY, Ozzie Moore**
  **Collegeville, Pennsylvania 19426 (US)**
- **SWARTZ, Andrew**
  **Collegeville, Pennsylvania 19426 (US)**
- **ZHANG, Qing**
  **Collegeville, Pennsylvania 19426 (US)**

(74) Representative: **Beck Greener LLP**
**Fulwood House**
**12 Fulwood Place**
**London WC1V 6HR (GB)**



(56) References cited:
**EP-A1- 2 518 116 US-A- 5 527 619**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Background of the Invention

The present invention provides an aqueous coating composition comprising an anion exchange resin, a latex, and an aminosilane; the composition is useful for delivering stain blocking and stain removal.

Historically, reactive pigments such as ZnO or barium metaborate, or other cationic additives have been used to improve stain blocking in films prepared from waterborne coating compositions. It is believed that these pigments bind stain molecules, which are typically anionic, thereby preventing stains from leeching through the film; however, according to US 5,527,619 (Rokowski) reactive pigments "can cause stability problems, such as viscosity increase and polymer gelation, and are known to be environmentally unfriendly."

Stain blocking is especially challenging when the formulator also wants to achieve stain removal: Improvement in one property tends to be at the expense of the other; nevertheless, this balance has not been a concern until recent years, where the development of a paint-and-primer-in-one formulation requires delivery of both excellent stain blocking and stain removal.

US 8,815,997 B2 (Zhang) discloses an aqueous dispersion of phosphorus acid functionalized polymer particles in combination with anion exchange resin (IER) copolymer beads suitable for paint-and-primer-in-one applications with improved stain blocking; nevertheless, Zhang's compositions fail to provide acceptable stain-blocking without compromising stain-removal.

Other efforts directed toward improving stain blocking have focused on improving the barrier properties of the coating through the use of hydrophobic and low molecular weight emulsion polymers. These attempts have been only partially successful; achieving stain block performance equivalent to solvent-based alkyd resins has remained elusive.

It would therefore be advantageous to discover a waterborne coating composition that is effective for improving block resistance and stain removal in coatings formulation.

Summary of the Invention

The present invention addresses a need in the art by providing a composition comprising a) an aqueous dispersion of polymer particles having an average particle size in the range of from 50 nm to 500 nm; b) from 0.01 to 7 weight percent, based on the weight the polymer particles, of anion exchange resin particles having an average particle size in the range of from 0.1 μm to 50 μm; and c) from 0.05 to 5 weight percent, based on the weight of the polymer particles, of an aminosilane, which is a compound that contains a primary, a secondary, or a tertiary amino group, or a quaternary ammonium group separated by 2 to 6 carbon atoms from an Si-O group, or a group that is hydrolyzable to an Si-O group. The composition of the present invention provides effective stain blocking and stain removal for coatings formulations.

Detailed Description of the Invention

The present invention is a composition comprising a) an aqueous dispersion of polymer particles having an average particle size in the range of from 50 nm to 500 nm; b) from 0.01 to 7 weight percent, based on the weight the polymer particles, of anion exchange resin particles having an average particle size in the range of from 0.1 μm to 50 μm; and c) from 0.05 to 5 weight percent, based on the weight of the polymer particles, of an aminosilane, which is a compound that contains a primary, a secondary, or a tertiary amino group, or a quaternary ammonium group separated by 2 to 6 carbon atoms, preferably 3 carbon atoms, from an Si-O group or a group that is hydrolyzable to an Si-O group.

The polymer particles preferably have an average particle size in the range of from 70 nm to 300 nm. As used herein, average particle size, with respect to the dispersed polymer particles, refers to the z-average particle size as measured by a Brookhaven BI90 particle size analyzer or a comparable dynamic light scattering instrument. In another embodiment of the present invention, the dispersion of polymer particles comprises a bimodal distribution: one mode in the range of 60 nm to 100 nm, and the other mode in the range of 180 nm to 300 nm.

The aqueous dispersion of polymer particles (the latex) includes a wide variety of latexes such as acrylic, styrene-acrylic, and vinyl ester based latexes. The solids content of the latex is preferably in the range of from 35, more preferably from 40 weight percent, to 55, more preferably to 50 weight percent.

In one embodiment of the present invention the polymer particles are functionalized with from 0.2 to 5 weight percent structural units of a phosphorus acid monomer, based on the weight of the polymer particles. The term "structural unit" of the named monomer refers to the remnant of the monomer after polymerization. Suitable phosphorus acid monomers include phosphonates and dihydrogen phosphate esters of an alcohol in which the alcohol contains or is substituted with a polymerizable vinyl or olefinic group. Preferred dihydrogen phosphate esters are phosphates of hydroxyalkylacrylates and hydroxyalkylmethacrylates, including phosphoethyl methacrylate and phosphopropyl methacrylate, with phosphoethyl methacrylate being especially preferred. Phosphoethyl methacrylate (PEM) is used herein to refer to the following structure:

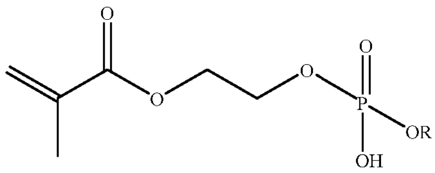

where R is H or

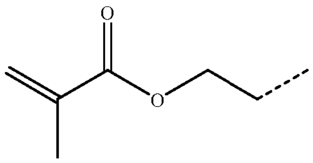

Another class of suitable phosphorus acid monomer is an allyl ethylene oxide phosphate of the following formula:

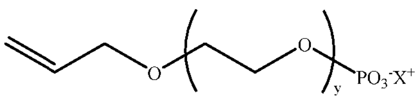

where y is from 3 to 5 and X is Li, Na, K, or $NH_4^+$. A commercially available example of an allyl ethylene oxide phosphate is Sipomer PAM-5000 monomer.

Anion exchange resin particles are water-insoluble particles, preferably water-insoluble porous particles, functionalized with basic groups that are capable of exchanging anions.

Examples of suitable basic groups include amines, quaternary ammonium salts, and aminophosphonic groups. Examples of anion exchange resins include polystyrene, polyacrylic, or phenol formaldehyde resins crosslinked with a suitable crosslinking agent such as divinyl benzene or allyl methacrylate. Commercial examples of anion exchange resins include DOWEX™ 1X2 Resin and AMBERLITE™ IRA-900 Cl Resin, both of which are polystyrene-divinyl benzene anion exchange resins functionalized with quaternary ammonium chloride.

The concentration of the anion exchange resin in the composition is preferably in the range of from 0.1, more preferably from 0.3 to 5, more preferably to 3 weight percent, based on the weight of the polymer particles. The anion exchange resin particles preferably have an average particle size in the range of from 0.75 μm, more preferably from 1 μm, and most preferably from 2 μm, to 20 μm, more preferably to 10 μm; as used herein average particle size for the anion exchange resin is the D50 median particle size diameter as measured using a Mastersizer 3000 Particle Size Analyzer, or a comparable laser light scattering device.

The aminosilane is a compound that contains a primary, a secondary, or a tertiary amino group, or a quaternary ammonium group separated by 2 to 6 carbon atoms, preferably 3 carbon atoms, from an Si-O group or a group that is hydrolyzable to an Si-O group (such as an SiH or SiCl group). More preferably, the aminosilane is illustrated by the following structure:

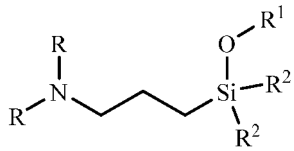

where each R is independently H, $C_1$-$C_3$-alkyl, phenyl, or 2-aminoethyl; $R^1$ is $C_1$-$C_3$-alkyl or $C(O)CH_3$; and each $R^2$ is independently H, $C_1$-$C_3$-alkyl, $C_1$-$C_3$-alkoxy, or $O$-$C(O)CH_3$.

Examples of suitable aminosilanes include *N*-methylaminopropyltrimethoxysilane, 2-aminoethyl-3-aminopropylmethyldimethoxysilane, aminopropyldimethylethoxysilane, *N*-2-aminoethyl-3-aminopropyltrimethoxysilane, 3-aminopropylmethyldimethoxysilane, 3-aminopropyltriethoxysilane, 3-aminopropyltrimethoxysilane, and *N*,*N*-dimethylaminopropyltrimethoxysilane.

The composition of the present invention is especially useful in providing stain blocking in pigmented coating compositions, for example, latex compositions that further comprise $TiO_2$. The composition advantageously further comprises a pigment, a rheology modifier and one or more additives selected from the group consisting of dispersants, surfactants, neutralizing agents, defoamers, extenders, opaque polymers, and coalescents.

It has been surprisingly been discovered that an aqueous composition comprising the combination of an aminosilane, and anion exchange resin, and a latex shows significant improvement in stain removal and stain blocking balance over compositions that comprise the latex and the aminosilane but no anion exchange resin, or the latex and the ion exchange resin but no aminosilane. It has further been discovered that polymer particles functionalized with a phosphorus acid monomer, preferably PEM, further improve the balance of stain blocking and stain resistance.

Comparative Example 1 - Preparation of a Latex

A monomer emulsion (ME1) was prepared from deionized water (670 g), Disponil FES 993 emulsifier (FES 993, 22.5 g), butyl acrylate (BA, 825 g), methyl methacrylate (MMA, 645 g), and glacial methacrylic acid (MAA, 30 g). To a 5-L 4-neck flask equipped with a mechanical stirrer, a reflux condenser, a thermocouple, and inlets for monomer emulsion and initiator solution was added deionized water (750 g) and FES 993 (5.77 g). The contents of the flask were stirred and heated to 82 °C. A seed charge consisting of a portion of ME1 (76.3 g) was added to the flask followed by an initiator solution consisting of deionized water (10 g) and sodium persulfate (3.75 g). The seed charge and the initiator solution were rinsed to the flask with deionized water. Polymerization of the seed charge was monitored by a thermocouple and when the temperature of the reaction mixture peaked, the remainder of ME1 as well as a second initiator solution consisting of deionized water (200 g), sodium persulfate (0.75 g), and sodium carbonate (10.5 g) were fed into the reactor monotonically over 150 min, while the reactor temperature was controlled at 85 °C. After completion of the feeds, the ME1 and initiator solution were rinsed into the flask using deionized water and the reactor was held at 85 °C for 10 min. The reactor was cooled to 80 °C, then a solution of ferrous sulfate heptahydrate (0.02 g) and ethylenediaminetetraacetic acid tetrasodium salt (0.02 g) in deionized water (5 g) was added to the flask and rinsed with deionized water. Residual monomer in the reaction mixture was polymerized by feeding a solution of *t*-butyl hydroperoxide (4 g) in deionized water (20 g); a separate solution of isoascorbic acid (2.2 g) in deionized water (20 g) was added to the flask over 20 min while cooling the reaction mixture to 55 °C. After the feeds were complete the reaction mixture was cooled to 30 °C and neutralized to pH 8 using ammonium hydroxide solution. Once neutralized, a solution consisting of KATHON™ LX 1400 Preservative (0.36 g), FES 993 (21.73 g), and deionized water (8.19 g) was added to the flask. The resulting latex was filtered to remove coagulum. The measured solids of the resulting latex was 45.7%.

Comparative Example 2 - Preparation of a Latex with Ground Ion Exchange Resin

The procedure of Comparative Example 1 was followed except that 0.75% of DOWEX™ 1X2 Ion Exchange Resin, ground to a median particle size of 4-6 μm (as taught in US 8,815,997 B2) was added to the final latex. The chloride form of the resin was used.

Comparative Example 3 - Preparation of a Latex with an Aminosilane

The procedure of Comparative Example 1 was followed except that 1 weight % 2-aminoethyl-3-aminopropyltrimethoxysilane (2.29 g, 1 weight percent based on latex solids) was added to a portion of the final latex (500 g).

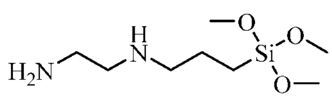

2-Aminoethyl-3-aminopropyltrimethoxysilane

Example 1 - Preparation of a Latex with Ground Ion Exchange Resin and 2-Aminoethyl-3-aminopropyltrimethoxysilane

The procedure of Comparative Example 2 was followed except that 1 weight % 2-aminoethyl-3-aminopropyltrimethoxysilane, based on latex solids, was added to the final latex.

Comparative Example 4 - Preparation of a PEM-Functionalized Latex

The procedure was carried out as described in Comparative Example 1 except that the monomers composing ME1 were BA (825 g), MMA (637.5 g), and phosphoethyl methacrylate (PEM, 60% active, 22.5 g), and the second

initiator solution was composed of sodium persulfate (0.75 g) and sodium carbonate (2.5 g) in deionized water (200 g).

Comparative Example 5 - Preparation of a PEM-Functionalized Latex with Ground Ion Exchange Resin.

The procedure of Comparative Example 4 was followed except that 0.75% of Dowex 1X2 ion exchange resin, ground to a median particle size of 4-6 μm (as taught in US 8,815,997 B2) was added to the final latex. The chloride form of the resin was used.

Comparative Example 6 - Preparation of a PEM-Functionalized Latex with an Aminosilane

The procedure of Comparative Example 4 was followed except that 1 weight % 2-aminoethyl-3-aminopropyltrimethoxysilane, based on latex solids, was added to the final latex.

Example 2 - Preparation of a PEM-Functionalized Latex with Ground Ion Exchange Resin and 2-Aminoethyl-3-aminopropyltrimethoxysilane

The procedure of Comparative Example 5 was followed except that 1% 2-aminoethyl-3-aminopropyltrimethoxysilane, based on latex solids, was added to the final latex.

Paint formulations (Comparative Examples 1a-6a, and Examples 1a-2a) were prepared as shown in Table 1 by adding the components to a container in the order listed. The amounts used were the same for formulations prepared using the binder from Comparative Examples 1-6 and Examples 1-2 except where indicated. PVC refers to pigment volume concentration. RM-3000 refers to ACRYSOL™ RM-3000 Rheology Modifier; Ultra EF refers to ROPAQUE™ Ultra EF Opaque Polymer; RM-995 refers to ACRYSOL™ RM-995 Rheology Modifier; Dispersant refers to TAMOL™ 2011 Dispersant (ROPAQUE, TAMOL and ACRYSOL are trademarks of The Dow Chemical Company or its Affiliates).

Table 1 - Interior Semi-Gloss Paint Formulation

| Material Name | Wt(g) | Level (%) | PVC |
|---|---|---|---|
| Grind | | | |
| Kronos 4311 $TiO_2$ | 310.02 | | 19.92 |
| Dispersant | 6 | 0.6 | |
| AMP-75 | 0.6 | | |
| 15-S-40 (20%) | 20.01 | | |
| A-2434 | 1.00 | | |
| RM-3000 | 15 | | |
| Minex 10 Extender | 18.62 | | 2.37 |
| ASP-170 Extender | 18.62 | | 2.40 |
| | | | |
| Letdown | | | |
| Latex | * | | |
| Water | 50.02 | | |
| Add Grind Here | | | |
| Ultra EF | 20 | | 3.3 |
| A-2434 | 0.5 | | |
| Propylene Glycol | 6 | | |
| Texanol | 5.02 | 2 | |
| RM-3000 | * | | |
| RM-995 | * | | |
| Water | * | | |

The amounts of the final water addition, binder, ACRYSOL™ RM-3000 Rheology Modifier and ACRYSOL™ RM-995 Rheology Modifier used in the semi-gloss formulation are shown in Table 2.

Table 2 - Semi-gloss Paint Formulations

| Latex Ex. # | Water (g) | Latex (g) | RM-995 (g) | RM-3000 (g) | Paint Ex. # |
|---|---|---|---|---|---|
| Comp. 1 | 36.4 | 535.7 | 5.6 | 20 | Comp. 1a |
| Comp. 2 | 9.25 | 548.9 | 5.6 | 20 | Comp. 2a |
| Comp. 3 | 33.4 | 526.4 | 5.2 | 24 | Comp. 3a |
| Ex. 1 | 29.4 | 546.4 | 5.2 | 28 | Ex. 1a |
| Comp. 4 | 41.4 | 535.7 | 2.4 | 19 | Comp. 4a |
| Comp. 5 | 42.2 | 546.4 | 2.4 | 18 | Comp. 5a |
| Comp. 6 | 42.9 | 535.7 | 2.4 | 17 | Comp. 6a |
| Ex. 2 | 42.2 | 540.4 | 2.4 | 18 | Ex. 2a |

Marker Stain Blocking Test:

A flat interior test paint was drawn down with a 75-μm (3-mil) Bird film applicator over white Leneta Penopac WB plain white chart and dried for 7 d at 25°C and 50% relative humidity. A marker stain (Blue Hydrophilic Crayola Washable Marker) was applied to a dried film across the width of the film and the marker was allowed to dry for 4 d. To assess marker stain blocking, a drawdown of the test paint and the control paint were made side-by-side perpendicular to the marker stain using a 75-μm (3-mil) Bird film applicator, and the film was allowed to dry overnight; then a second coat was similarly applied using a 178-μm (7-mil) "U" shaped straddle bar film applicator, and then the film was allowed to dry overnight.

Marker stain blocking was measured using an X-Rite Spectrophotometer Model Ci7. This equipment was used to measure the color change of the unstained and stained area of the substrate which was covered by the paint coating as described above. The value used to express the degree of marker stain blocking is Delta E (ΔE), which is the total color difference represented by a factual sum of 'L', 'a', and 'b' values such that:

$$\Delta E = (\Delta_L{}^2 + \Delta_a{}^2 + \Delta b^2)^{1/2}$$

'L' is a measure of color intensity; L = 100 is equivalent to white, and L = 0 is equivalent to black; "a" is a measure of the red and green color hues, wherein positive equates to red and negative equates to green; "b" is a measure of yellow and blue color hues, wherein positive equates to yellow and negative equates to blue. When measuring ΔE of the test paints and controls, lower ΔE indicate better marker stain blocking performance.

Stain Removal Test:

The stain removal test was carried out in accordance with ASTM Method D4828.

Table 3 illustrates stain blocking for blue marker and stain removal for red wine for binder functionalized with MAA.

Table 3 - ΔE Marker Stain Blocking and Stain Removal Results of Paint Coatings with Binders Functionalized with MAA

| Examples | ΔE Blue Marker Stain Blocking | ΔE Red Wine Stain Removal |
|---|---|---|
| Comp. 1a | 9.7 | 10.4 |
| Comp. 2a | 5.7 | 10.9 |
| Comp. 3a | 9.9 | 4.0 |
| Ex. 1a | 4.7 | 7.3 |

When anion exchange resin is present in an acrylic binder (Comp. 2a), the stain blocking is improved over Comp. 1a, which does not contain anion exchange resin; however, red wine stain removal for Comp. 2a is not improved

over Comp. 1a. Conversely, when the aminosilane is present in an acrylic binder (Comp. 3a), stain removal is significantly improved over Comp. 1a, but stain blocking is not improved.

When both ground ion exchange resin and aminosilane are present in an acrylic binder (Example la), stain blocking is further reduced relative to Comparative 2a, revealing a surprising synergistic effect. Additionally, stain removal is significantly better in Example 1a as compared with Comparative 1a; thus, improvement in both stain blocking and stain removal properties are observed both ion exchange resin and aminosilane are present in the formulation.

Table 4 - ΔE Marker Stain Blocking and Stain Removal Results of Paint Coatings with Binders Functionalized with PEM

| Ex. | ΔE Blue Marker Stain Blocking | ΔE Red Wine Stain Removal |
|---|---|---|
| Comp. 4a | 13.6 | 1.0 |
| Comp. 5a | 5.9 | 1.3 |
| Comp. 6a | 7.4 | 0.7 |
| Ex. 2a | 3.7 | 0.9 |

The data show that when ground anion exchange resin and aminosilane are present in a PEM-functionalized binder Ex. 2a, a balance of superior stain blocking and stain removal properties can be achieved.

## Claims

1. A composition comprising a) an aqueous dispersion of polymer particles having an average particle size in the range of from 50 nm to 500 nm; b) from 0.01 to 7 weight percent, based on the weight the polymer particles, of anion exchange resin particles having an average particle size in the range of from 0.1 μm to 50 μm; and c) from 0.05 to 5 weight percent, based on the weight of the polymer particles, of an aminosilane, which is a compound that contains a primary, a secondary, or a tertiary amino group, or a quaternary ammonium group separated by 2 to 6 carbon atoms from an Si-O group, or a group that is hydrolyzable to an Si-O group.

2. The composition of Claim 1 wherein the polymer particles are acrylic or styrene acrylic polymer particles, and wherein the aminosilane is represented by the following structure:

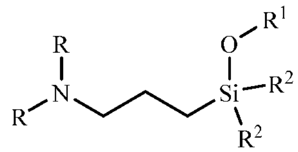

where each R is independently H, $C_1$-$C_3$-alkyl, phenyl, or 2-aminoethyl; $R^1$ is $C_1$-$C_3$-alkyl or $C(O)CH_3$; and each $R^2$ is independently H, $C_1$-$C_3$-alkyl, $C_1$-$C_3$-alkoxy, or $O$-$C(O)CH_3$.

3. The composition of Claim 2 wherein the aminosilane is represented by the following structure:

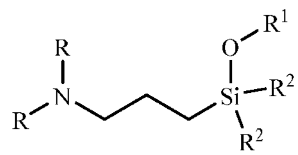

where each R is independently H, $C_1$-$C_3$-alkyl, or 2-aminoethyl; $R^1$ is $C_1$-$C_3$-alkyl; and each $R^2$ is independently H, $C_1$-$C_3$-alkyl, or $C_1$-$C_3$-alkoxy.

4. The composition of Claim 3 wherein the anion exchange resin particles are crosslinked porous polymer particles functionalized with an amine or a quaternary ammonium salt.

5. The composition of Claim 4 wherein the concentration of the anion exchange resin particles are in the range of from 0.1 to 3 weight percent, based on the weight of the polymer particles; and wherein the anion exchange resin particles

are polystyrene-divinyl benzene anion exchange resin particles functionalized with a quaternary ammonium salt.

6. The composition of Claim 5 wherein the aminosilane is *N*-methylaminopropyltrimethoxysilane, 2-aminoethyl-3 - aminopropylmethyldimethoxysilane, aminopropyldimethylethoxysilane, *N*-2-aminoethyl-3-aminopropyltrimethoxysilane, 3-aminopropylmethyldimethoxysilane, 3-aminopropyltriethoxysilane, 3-aminopropyltrimethoxysilane, or *N*,*N*-dimethylaminopropyltrimethoxysilane.

7. The composition of any of Claims 1 to 6 wherein the polymer particles are functionalized with from 0.2 to 5 weight percent structural units of a phosphorus acid monomer, based on the weight of the polymer particles.

8. The composition of Claim 6 wherein the phosphorus acid monomer is phosphoethyl methacrylate or an allyl ethylene oxide phosphate of the following formula:

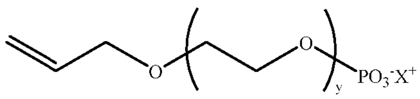

where y is from 3 to 5 and X is Li, Na, K, or $NH_4^+$.

9. The composition of Claim 8 wherein the phosphorus acid monomer is phosphoethyl methacrylate and the dispersion of polymer particles has a bimodal distribution, having one mode with a volume average particle size in the range of 60 nm to 100 nm and the other mode with a volume average particle size in the range of 180 nm to 300 nm.

10. The composition of Claim 2 which further includes a pigment, a rheology modifier, and one or more additives selected from the group consisting of dispersants, surfactants, neutralizing agents, defoamers, extenders, opaque polymers, and coalescents.

## Patentansprüche

1. Zusammensetzung, umfassend a) eine wässrige Dispersion von Polymerpartikeln, die eine durchschnittliche Partikelgröße in dem Bereich von 50 nm bis 500 nm aufweisen; b) von 0,01 bis 7 Gew.-%, basierend auf dem Gewicht der Polymerpartikel, Anionenaustauscherharzpartikel, die eine durchschnittliche Partikelgröße in dem Bereich von 0,1 μm bis 50 μm aufweisen; und c) von 0,05 bis 5 Gew.-%, basierend auf dem Gewicht der Polymerpartikel, ein Aminosilan, das eine Verbindung ist, die eine primäre, eine sekundäre oder eine tertiäre Aminogruppe oder eine quaternäre Ammoniumgruppe, die durch 2 bis 6 Kohlenstoffatome von einer Si-O-Gruppe getrennt ist, oder eine Gruppe, die zu einer Si-O-Gruppe hydrolysierbar ist, enthält.

2. Zusammensetzung nach Anspruch 1, wobei die Polymerpartikel Acryl- oder Styrolacrylpolymerpartikel sind und wobei das Aminosilan durch die folgende Struktur dargestellt wird:

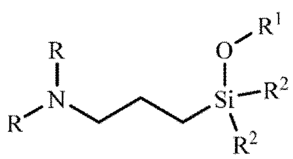

wobei jedes R unabhängig H, $C_1$-$C_3$-Alkyl, Phenyl oder 2-Aminoethyl ist; $R^1$ $C_1$-$C_3$-Alkyl oder $C(O)CH_3$ ist; und jedes $R^2$ unabhängig H, $C_1$-$C_3$-Alkyl, $C_1$-$C_3$-Alkoxy oder $C(O)CH_3$ ist.

3. Zusammensetzung nach Anspruch 2, wobei das Aminosilan durch die folgende Struktur dargestellt wird:

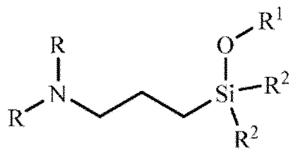

wobei jedes R unabhängig H, $C_1$-$C_3$-Alkyl oder 2-Aminoethyl ist; $R^1$ $C_1$-$C_3$-Alkyl ist; und jedes $R^2$ unabhängig H, $C_1$-$C_3$-Alkyl oder $C_1$-$C_3$-Alkoxy ist.

**4.** Zusammensetzung nach Anspruch 3, wobei die Anionenaustauscherharzpartikel quervernetzte poröse Polymerpartikel sind, die mit einem Amin oder einem quaternären Ammoniumsalz funktionalisiert sind.

**5.** Zusammensetzung nach Anspruch 4, wobei die Konzentration der Anionenaustauscherharzpartikel in dem Bereich von 0,1 bis 3 Gew.-%, basierend auf dem Gewicht der Polymerpartikel, liegt; und wobei die Anionenaustauscherharzpartikel Polystyroldivinylbenzol-Anionenaustauscherharzpartikel sind, die mit einem quaternären Ammoniumsalz funktionalisiert sind.

**6.** Zusammensetzung nach Anspruch 5, wobei das Aminosilan N-Methylaminopropyltrimethoxysilan, 2-Aminoethyl-3-aminopropylmethyldimethoxysilan, Aminopropyldimethylethoxysilan, *N*-2-Aminoethyl-3-aminopropyltrimethoxysilan, 3-Aminopropylmethyldimethoxysilan, 3-Aminopropyltriethoxysilan, 3-Aminopropyltrimethoxysilan oder N,N-Dimethylaminopropyltrimethoxysilan, ist.

**7.** Zusammensetzung nach einem der Ansprüche 1 bis 6, wobei die Polymerpartikel mit von 0,2 bis 5 Gew.-% Struktureinheiten eines Phosphorsäuremonomers, basierend auf dem Gewicht der Polymerpartikel, funktionalisiert sind.

**8.** Zusammensetzung nach Anspruch 6, wobei das Phosphorsäuremonomer Phosphoethylmethacrylat oder ein Allylethylenoxidphosphat der folgenden Formel ist:

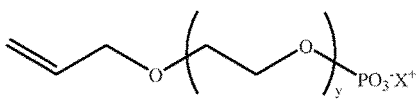

wobei y von 3 bis 5 ist und X Li, Na, K oder $NH_4^+$ ist.

**9.** Zusammensetzung nach Anspruch 8, wobei das Phosphorsäuremonomer Phosphoethylmethacrylat ist und die Dispersion von Polymerpartikeln eine bimodale Verteilung aufweist, die einen Modus mit einer volumengemittelten Partikelgröße in dem Bereich von 60 nm bis 100 nm und den anderen Modus mit einer volumengemittelten Partikelgröße in dem Bereich von 180 nm bis 300 nm aufweist.

**10.** Zusammensetzung nach Anspruch 2, die ferner ein Pigment, einen Rheologiemodifikator und einen oder mehrere Zusatzstoffe beinhaltet, die aus der Gruppe ausgewählt sind, bestehend aus Dispergiermitteln, Tensiden, Neutralisationsmitteln, Antischaummitteln, Streckmitteln, lichtundurchlässigen Polymeren und Koaleszenzmitteln.

## Revendications

**1.** Composition comprenant a) une dispersion aqueuse de particules polymères ayant une taille moyenne de particules dans la plage allant de 50 nm à 500 nm ; b) de 0,01 à 7 pour cent en poids, sur la base du poids des particules polymères, de particules de résine échangeuse d'anions ayant une taille moyenne de particules dans la plage allant de 0,1 μm à 50 μm ; et c) de 0,05 à 5 pour cent en poids, sur la base du poids des particules polymères, d'un aminosilane, qui est un composé qui contient un groupe amino primaire, secondaire, ou tertiaire, ou un groupe ammonium quaternaire séparé par 2 à 6 atomes de carbone par rapport à un groupe Si-O, ou un groupe qui est hydrolysable en un groupe Si-O.

**2.** Composition selon la revendication 1 dans laquelle les particules polymères sont des particules polymères acryliques ou styrène-acryliques, et dans laquelle l'aminosilane est représenté par la structure suivante :

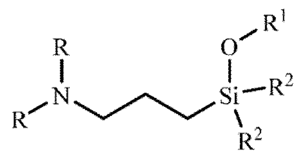

où chaque R est indépendamment H, alkyle en $C_1$ à $C_3$, phényle, ou 2-aminoéthyle ; $R^1$ est alkyle en $C_1$ à $C_3$ ou $C(O)CH_3$ ; et chaque $R^2$ est indépendamment H, alkyle en $C_1$ à $C_3$, alcoxy en $C_1$ à $C_3$, ou O-C(O)$CH_3$.

**3.** Composition selon la revendication 2 dans laquelle l'aminosilane est représenté par la structure suivante :

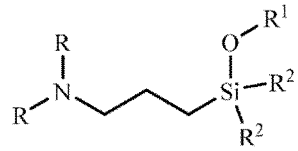

où chaque R est indépendamment H, alkyle en $C_1$ à $C_3$, ou 2-aminoéthyle ; $R^1$ est alkyle en $C_1$ à $C_3$ ; et chaque $R^2$ est indépendamment H, alkyle en $C_1$ à $C_3$, ou alcoxy en $C_1$ à $C_3$.

**4.** Composition selon la revendication 3 dans laquelle les particules de résine échangeuse d'anions sont des particules polymères poreuses réticulées fonctionnalisées avec une amine ou un sel d'ammonium quaternaire.

**5.** Composition selon la revendication 4 dans laquelle la concentration des particules de résine échangeuse d'anions est dans la plage allant de 0,1 à 3 pour cent en poids, sur la base du poids des particules polymères ; et dans laquelle les particules de résine échangeuse d'anions sont des particules de résine échangeuse d'anions de type polystyrène-divinylbenzène fonctionnalisées avec un sel d'ammonium quaternaire.

**6.** Composition selon la revendication 5 dans laquelle l'aminosilane est N-méthylaminopropyltriméthoxysilane, 2-aminoéthyl-3-aminopropylméthyldiméthoxysilane, aminopropyldiméthyléthoxysilane, *N*-2-aminoéthyl-3-aminopropyltriméthoxysilane, 3-aminopropylméthyldiméthoxysilane, 3-aminopropyltriéthoxysilane, 3-aminopropyltriméthoxysilane, ou *N,N*-diméthylaminopropyltriméthoxysilane.

**7.** Composition selon l'une quelconque des revendications 1 à 6 dans laquelle les particules polymères sont fonctionnalisées avec 0,2 à 5 pour cent en poids de motifs structuraux d'un monomère acide de phosphore, sur la base du poids des particules polymères.

**8.** Composition selon la revendication 6 dans laquelle le monomère acide de phosphore est un méthacrylate de phosphoéthyle ou un phosphate d'allyl-oxyde d'éthylène de la formule suivante :

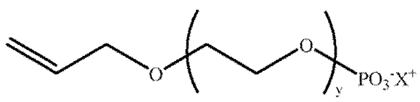

où y va de 3 à 5 et X est Li, Na, K, ou $NH_4^+$.

**9.** Composition selon la revendication 8 dans laquelle le monomère acide de phosphore est du méthacrylate de phosphoéthyle et la dispersion de particules polymères a une distribution bimodale, ayant un mode avec une taille moyenne de particule en volume dans la plage de 60 nm à 100 nm et l'autre mode avec une taille moyenne de particule en volume dans la plage de 180 nm à 300 nm.

**10.** Composition selon la revendication 2 qui inclut en outre un pigment, un agent modifiant la rhéologie, et un ou plusieurs additifs choisis dans le groupe constitué de dispersants, agents tensioactifs, agents neutralisants, démoussants, agents d'allongement, polymères opaques, et agents coalescents.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5527619 A, Rokowski
- US 8815997 B2, Zhang